(19) **Europäisches Patentamt**
**European Patent Office**
**Office européen des brevets**

(11) **EP 2 159 977 A2**

(12) **EUROPEAN PATENT APPLICATION**

(43) Date of publication:
**03.03.2010 Bulletin 2010/09**

(51) Int Cl.:
**H04L 25/02** (2006.01)

(21) Application number: **09008459.1**

(22) Date of filing: **29.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **25.08.2008 JP 2008215254**

(71) Applicant: **Hitachi, Ltd.**
**Chiyoda-ku**
**Tokyo 100-8280 (JP)**

(72) Inventors:
• **Xu, Dan**
  **Tokyo 100-8220 (JP)**
• **Kuwahara, Mikio**
  **Tokyo 100-8220 (JP)**
• **Ishida, Yuji**
  **Tokyo 100-8220 (JP)**
• **Taira, Masanori**
  **Tokyo 100-8220 (JP)**

(74) Representative: **Beetz & Partner**
**Patentanwälte**
**Steinsdorfstrasse 10**
**80538 München (DE)**

(54) **Wireless terminal, base station and channel estimation method**

(57) In a wireless communication system based on an OFDM access system, when forgetting averaging channel estimation is performed, there occurs a phase difference between a present channel estimated value and a past estimated value due to a change of FFT operation timing at a reception side. The error of the channel estimated value caused by the phase difference is corrected. A synchronization catching/tracking unit (200-17) to determine an operation timing of an FFT from a received signal is provided, and an FFT operation timing differences acquisition section (500) to grasp a change of the operation timing of the FFT generated by the synchronization catching/tracking unit (200-17) is provided. Based on an FFT operation timing change amount as an output of the FFT operation timing difference acquisition section (500), a rotation operation is performed on a propagation path estimated result stored in a channel estimation section (400-1) to estimate a propagation path from a received pilot signal, so that the error of the channel estimated value is corrected.

BASE STATION (BS) TRANSMISSION SIDE

FIG.5

EP 2 159 977 A2

## Description

### CLAIM OF PRIORITY

The present application claims priority from Japanese patent application JP 2008-215254 filed on August 25,2008,the content of which is hereby <u>incorporated by reference</u> into this application.

## BACKGROUND OF THE INVENTION

### Field of the Invention

The present invention relates to a wireless terminal, a base station and a channel characteristic estimating method, and particularly to a wireless terminal, a base station and a channel characteristic estimating method, in which Orthogonal Frequency Division Multiplex (OFDM) is adopted as a wireless communication system, and channel estimation is performed using forgetting averaging.

Description of the Related Art

OFDM is Orthogonal Frequency Division Multiplex and is one of digital modulation systems used in wireless or the like. An OFDM access system has excellent resistance against Multi-path Interference (MPI), and is adopted as a transmission system of wireless LAN of IEEE802.11a, a power line modem or the like. Besides, the standards of Ultra Mobil Broadband (UMB) as 3.9 generation system, Long Term Evolution (LTE) or the like also adopts the OFDM system, and in recent years, attention is paid to the study and development for the OFDM system.

When an OFDM signal influenced by a multi-path transmission path (propagation path) is received, a demodulation process in a receiver outputs a symbol including distortion. Accordingly, in order to correctly demodulate the received symbol, in the receiver, it is necessary that the characteristic (channel characteristic) of the propagation path is estimated, and the distortion of the propagation path is removed. In a practical system, information for propagation path estimation is added to the transmitted symbol, so that highly reliable estimation can be performed even under a bad condition. The symbol for propagation path estimation added as stated above is called a pilot symbol.

In an actual transmission path, since the transmission path characteristic is gradually changed with the elapse of time, once estimated characteristic can not be continued to be used. Accordingly, it is necessary that the pilot symbol is periodically transmitted, and the update to the newest state is performed before the transmission path characteristic is changed much. The insertion interval of the pilot symbol is determined in view of the change speed of the transmission path characteristic. When the pilot symbol is frequently inserted, the transmission efficiency is largely reduced. Actually, even if pilot symbols are not transmitted for all symbols, the transmission path characteristic can be estimated for all the symbols only by transmitting limited symbols.

When the channel estimation is performed based on the received pilot symbol, one of simple methods is a temporal linear interpolation. However, the linear interpolation is a first-order approximation, and the change of the actual transmission path characteristic is not necessarily appropriately represented. Especially, when the variation of the transmission path characteristic is large, the accuracy of the approximation is reduced.

There are various interpolation systems to give more excellent approximation than the linear approximation. Typically, with respect to Doppler widening fd of a transmission path, the transmission path characteristic can be completely reproduced from sample values sampled at such an interval that an interval between the pilot symbols is shorter than 1/fd. However, in order to perform this process, transmission path estimated values for the pilot symbols transmitted before and after the symbol to be estimated are required, and the symbols in a time direction for a definite period of time must be stored. Thus, the receiver requires a large memory.

Patent document 1 discloses correcting a shift of FFT operation timing.
[Patent document 1] JP-A-2000-295195

## SUMMARY OF THE INVENTION

There is forgetting averaging as a method simpler than the sampling interpolation and as a method in which channel estimation accuracy higher than that of the linear interpolation is obtained. The forgetting averaging is a method in which an estimated value for a past pilot symbol is reflected on a transmission path estimated value. The following numerical expression (1) represents the principle of the forgetting averaging.

$$h'^{n}(w) = \alpha\, h^{n}(w) + (1-\alpha) h'^{n-1}(w) \tag{1}$$

Where, $h'^{n}(w)$ denotes a transmission path estimated value at time n, $h'^{n-1}(w)$ denotes a transmission path estimated value at time n-1, and $h^{n}(w)$ denotes an estimated value obtained at time n by a pilot symbol. Besides, $\alpha$ denotes a forgetting averaging factor, and when $\alpha$ is close to 1, information obtained by the newest pilot symbol is reflected on the estimated value $h^{n}(w)$.

In the OFDM system, the forgetting averaging channel estimation has a reasonable hard scale, and accuracy higher than that of the channel estimating method of the temporal linear interpolation is expected. However, when the forgetting averaging channel estimation is performed, phase rotation on a frequency axis occurs in a channel estimated value obtained by an FFT operation at the reception side. The amount of the phase rotation is $\exp(jw\tau)$. Here, w denotes a frequency, and $\tau$ denotes accumulated FFT operation timing at time n. According to the expression (1), when the FFT operation timing at time n is different from the FFT operation timing at time n-1, since the phase rotation amount of the present channel estimated value and that of the past estimated value are different (expression (2)), an error is given to the channel estimated value after averaging.

$$h'^{n}(w) = \alpha\, h^{n}(w) e^{jw\tau} + (1-\alpha) h'^{n-1}(w) \tag{2}$$

Accordingly, it is necessary to correct the error of the channel estimated value due to the change of the FFT window position (difference of the operation timing).

There is a case where the FFT operation timing detected by a synchronization catching/tracking unit is changed with the elapse of time by a factor such as an error of the synchronization catching/tracking unit to detect the FFT operation timing at the reception side of the OFDM system or movement of a terminal.

As stated above, in the wireless communication system based on the OFDM access system, when the forgetting averaging channel estimation is performed, there is a case where a phase difference occurs between the present channel estimated value and the past estimated value by the change of the FFT operation timing at the reception side. Since the error of the channel estimated value occurs by the phase difference, it is necessary to correct the error of the channel estimated value.

Although patent document 1 proposes the correction of the error due to the shift of the FFT operation timing, it can not be applied to the OFDM system using the channel estimating method of the forgetting averaging.

In view of the above, it is an object of the present invention to provide a wireless terminal, a base station and a channel characteristic estimating method, in which in a wireless communication system using OFDM, a channel characteristic is estimated using forgetting averaging. Besides, it is another object of the invention to correct a phase rotation amount difference between a past channel estimated value and a present channel estimated value due to a change of FFT operation timing in a wireless communication system in which forgetting averaging is performed. Besides, it is another object of the invention to raise the accuracy of channel estimation by forgetting averaging.

A wireless communication apparatus is a wireless communication apparatus (wireless terminal) which has a built-in FFT and performs OFDM modulation, includes a synchronization catching/tracking unit to determine an operation timing of the FFT from a received signal, and an FFT operation timing difference acquisition section to grasp a change of operation timing of the FFT generated by the synchronization catching/tracking unit, and based on an FFT operation timing change amount as an output of the FFT operation timing difference acquisition section, a rotation operation is performed on a propagation path estimated result stored in a propagation path estimation section to estimate a propagation path from a received pilot.

Besides, the FFT operation timing difference acquisition section of the wireless communication apparatus calculates a rotation factor of the rotation operation performed by the propagation path estimation section, and outputs the rotation factor to the propagation path estimation section.

Besides, the propagation path estimation section of the wireless communication apparatus generates the propagation path estimation result for a plurality of subcarriers and a plurality of symbol timings by an interpolation operation of a received pilot signal, and at that time, the propagation path estimated result stored in the past and the propagation path estimated result obtained from a newly received pilot are used, and the propagation path estimated result is sequentially updated by forgetting averaging. Further, the rotation operation is performed on the propagation path estimated result stored in the past.

In the wireless communication apparatus, the rotation factor is calculated by performing an exponential operation on a multiplication of an FFT operation timing change amount acquired from the FFT operation timing difference acquisition section and a frequency of each subcarrier.

Besides, according to another aspect of the invention, a wireless communication apparatus is a wireless communication apparatus (wireless terminal) which has a built-in FFT and performs OFDM modulation, and includes a synchronization catching/tracking unit to determine an operation timing of the FFT from a received signal, and an FFT operation timing difference acquisition section to grasp a change of the operation timing of the FFT generated by the synchronization catching/tracking unit, and based on the FFT operation timing change amount as an output of the FFT operation timing difference acquisition section, a rotation operation is performed on a propagation path estimated result stored in a propagation path estimation section to estimate a propagation path from a received pilot and data.

The FFT operation timing difference acquisition section of the wireless communication apparatus calculates a rotation factor of the rotation operation performed by the propagation path estimation section, and outputs the rotation factor to the propagation path estimation section and the data.

In the propagation path estimation section of the wireless communication apparatus generates the propagation path estimation result for a plurality of subcarriers and a plurality of symbol timings by an interpolation operation of a received pilot signal, and at that time, the propagation path estimated result stored in the past and the propagation path estimated result obtained from a newly received pilot are used, and the propagation path estimated result is sequentially updated by forgetting averaging. Further, the rotation operation is performed on the propagation path estimated result stored in the past and the data.

A wireless communication apparatus is a wireless communication apparatus (base station) which has a built-in FFT and performs OFDM modulation, includes a time alignment unit to adjust timing of a transmitted signal from detection of a received signal, and based on a time alignment adjustment amount generated by the time alignment unit, a rotation operation is performed on a propagation path estimated result stored in the propagation path estimation section to estimate a propagation path from a received pilot.

The time alignment section of the wireless communication apparatus calculates a rotation factor of the rotation operation performed by the propagation path estimation section, and outputs the rotation factor to the propagation path estimation section.

Besides, according to another aspect of the invention, a wireless communication apparatus is a wireless communication apparatus (base station) which has a built-in FFT and performs OFDM modulation, and includes a forgetting averaging execution timing control section, and a forgetting averaging operation is performed based on a propagation path estimated value for estimating a propagation path from a pilot received at a timing previously determined by a forgetting averaging execution timing control section and a propagation path estimated result stored in the past.

An error of a channel estimated value is corrected, so that a more correct channel estimated value is obtained. Since a decoding function in a wireless communication receiver performs an arithmetic operation by using the channel estimated value, a data error rate becomes small, and the reception quality of data communication is improved. Besides, as the rate of the data communication becomes high, the influence of the channel estimated value on the data error rate becomes large. Therefore, in the wireless communication system in which the speed of data communication becomes higher and higher in future, it is believed the present invention can be sufficiently applied.

According to the first solving means of this invention, there is provided a wireless terminal in a wireless communication system in which communication is performed between the wireless terminal and a base station by orthogonal frequency division multiplex, comprising:

a Fourier transformer to Fourier-transform a received signal from the base station at a determined operation timing;
a synchronization catching/tracking unit to determine the operation timing of the Fourier transformer from the received signal; and
a channel estimator to estimate a channel characteristic of a wireless channel between the wireless terminal and the base station and to demodulate data transmitted by the base station from the received signal and the estimated channel characteristic,

wherein the channel estimator
obtains a first channel characteristic estimated value based on a pilot signal included in the received signal of a first operation timing of the Fourier transformer,
reads a second channel characteristic estimated value estimated at a second operation timing older than the first operation timing and stored, and
estimates the channel characteristic of the wireless channel by forgetting averaging of the first channel characteristic estimated value and the second channel characteristic estimated value.

According to the second solving means of this invention, there is provided a base station in a wireless communication system in which communication is performed between a wireless terminal and the base station by orthogonal frequency division multiplex, comprising:

a Fourier transformer to Fourier-transform a received signal from the wireless terminal at each operation timing;

a timing control section to output a time alignment adjustment amount to the wireless terminal and to adjust a packet transmission timing of the wireless terminal;

a time alignment adjustment amount acquisition section to acquire the time alignment adjustment amount from the timing control section;

a rotation factor arithmetic section to obtain a rotation factor for a phase rotation operation based on the time alignment adjustment amount acquired by the time alignment adjustment amount acquisition section; and

a channel estimator to estimate a channel characteristic of a wireless channel between the wireless terminal and the base station and to demodulate data transmitted by the wireless terminal based on the received signal and the estimated channel characteristic,

wherein the channel estimator

obtains a first channel characteristic estimated value based on a pilot signal included in the received signal of a first operation timing,

reads a second channel characteristic estimated value estimated at a second operation timing older than the first operation timing and stored, and

performs the phase rotation operation on the second channel characteristic estimated value by using the rotation factor obtained by the rotation factor arithmetic section, and estimates the channel characteristic of the wireless channel by forgetting averaging of a result of the phase rotation operation and the first channel characteristic estimated value.

According to the third solving means of this invention, there is provided a base station in a wireless communication system in which communication is performed between a wireless terminal and the base station by orthogonal frequency division multiplex, comprising:

a Fourier transformer to Fourier-transform a received signal from the wireless terminal at each operation timing;

a timing control section to output a time alignment adjustment amount to the wireless terminal and to perform, at a previously determined timing, a time alignment of adjusting a packet transmission timing of the wireless terminal;

a forgetting averaging execution timing control section to determine whether a timing is a timing when the timing control section executes the time alignment; and

a channel estimator to estimate a channel characteristic of a wireless channel between the wireless terminal and the base station and to demodulate data transmitted by the wireless terminal based on the received signal and the estimated channel characteristic,

wherein at the timing when the time alignment is performed, the channel estimator estimates the channel characteristic of the wireless channel based on a pilot signal included in the received signal, and

wherein at the timing when the time alignment is not performed,

the channel estimator

obtains a first channel characteristic estimated value based on the pilot signal included in the received signal of a first operation timing,

reads a second channel characteristic estimated value estimated at a second operation timing older than the first operation timing and stored, and

estimates the channel characteristic of the wireless channel by forgetting averaging of the first channel characteristic estimated value and the second channel characteristic estimated value.

According to the fourth solving means of this invention, there is provided a channel characteristic estimating method for estimating a channel characteristic of a wireless channel between a wireless terminal and a base station in a system in which communication is performed between the wireless terminal and the base station by orthogonal frequency division multiplex, comprising steps of:

obtaining a first channel characteristic estimated value based on a pilot signal included in the received signal of a first operation timing of a Fourier transformer;

reading a second channel characteristic estimated value estimated at a second operation timing older than the first operation timing and stored; and

estimating the channel characteristic of the wireless channel by forgetting averaging of the first channel characteristic estimated value and the second channel characteristic estimated value.

According to the fifth solving means of this invention, there is provided a channel characteristic estimating method for estimating a channel characteristic of a wireless channel between a wireless terminal and a base station in a system in which communication is performed between the wireless terminal and the base station by orthogonal frequency division multiplex, comprising steps of:

outputting a time alignment adjustment amount to the wireless terminal and adjusting a packet transmission timing of the wireless terminal;

acquiring the time alignment adjustment amount;

obtaining a rotation factor for a phase rotation operation based on the time alignment adjustment amount acquired;

obtaining a first channel characteristic estimated value based on a pilot signal included in a received signal of a first operation timing of a Fourier transformer;

reading a second channel characteristic estimated value estimated at a second operation timing older than the first operation timing and stored; and

performing the phase rotation operation on the second channel characteristic estimated value by using the rotation factor obtained at the step of obtaining the rotation factor, and estimating the channel characteristic of the wireless channel by forgetting averaging of a result of the phase rotation operation and the first channel characteristic estimated value.

According to the sixth solving means of this invention, there is provided a channel characteristic estimating method for estimating a channel characteristic of a wireless channel between a wireless terminal and a base station in a system in which communication is performed between the wireless terminal and the base station by orthogonal frequency division multiplex, comprising steps of:

outputting a time alignment adjustment amount to the wireless terminal and performing, at a previously determined timing, a time alignment of adjusting a packet transmission timing of the wireless terminal;

determining whether a timing is a timing to execute the time alignment or not;

estimating, at the timing when the time alignment is performed, the channel characteristic of the wireless channel based on a pilot signal included in the received signal; and

obtaining, at the timing when the time alignment is not performed, a first channel characteristic estimated value based on the pilot signal included in the received signal of a first operation timing, reading a second channel characteristic estimated value estimated at a second operation timing older than the first operation timing and stored, and estimating the channel characteristic of the wireless channel by forgetting averaging of the first channel characteristic estimated value and the second channel characteristic estimated value.

According to the present invention, it is possible to provide a wireless terminal, a base station and a channel characteristic estimating method, in which in a wireless communication system using OFDM, a channel characteristic is estimated using forgetting averaging. Besides, according to the invention, it is possible to correct a phase rotation amount difference between a past channel estimated value and a present channel estimated value due to a change of FFT operation timing in a wireless communication system in which forgetting averaging is performed. Besides, according to the invention, it is possible to raise the accuracy of channel estimation by forgetting averaging.

**BRIEF DESCRIPTION OF THE DRAWINGS**

FIG. 1 is a whole structural view of a wireless communication system.
FIG. 2 is a system function block diagram in a down direction of the wireless communication system using OFDM.
FIG. 3 is a view showing a down packet frame format.
FIG. 4 is a structural view of a channel estimator.
FIG. 5 is a system function block diagram in a down direction of the wireless communication system in which a rotation factor is corrected and channel estimation is performed.
FIG. 6 is a structural view of the channel estimator.
FIG. 7 is a structural view of the channel estimator.
FIG. 8 is a view showing a modified example of a first embodiment.
FIG. 9 is an up system function block diagram of a wireless communication system in a second embodiment.
FIG. 10 is a view of an up packet frame format.
FIG. 11 is a view showing a sequence of up time alignment in the second embodiment.
FIG. 12 is an up system function block diagram of the wireless communication system in the second embodiment.
FIG. 13 is an explanatory view of a forgetting averaging method in the second embodiment.
FIG. 14 is an up system function block diagram of the wireless communication system in the second embodiment.
FIG. 15 is an explanatory view of the forgetting averaging method in the second embodiment.
FIG. 16 is a flowchart of a forgetting averaging execution timing control section.
FIG. 17 is a flowchart of channel characteristic estimation in a wireless terminal.

FIG. 18 is a flowchart of channel characteristic estimation in a base station.
FIG. 19 is a flowchart of the channel characteristic estimation in the base station.

## DETAILED DESCRIPTION OF THE INVENTION

Hereinafter, embodiments of the present invention will be described with reference to the drawings.

### 1. First embodiment

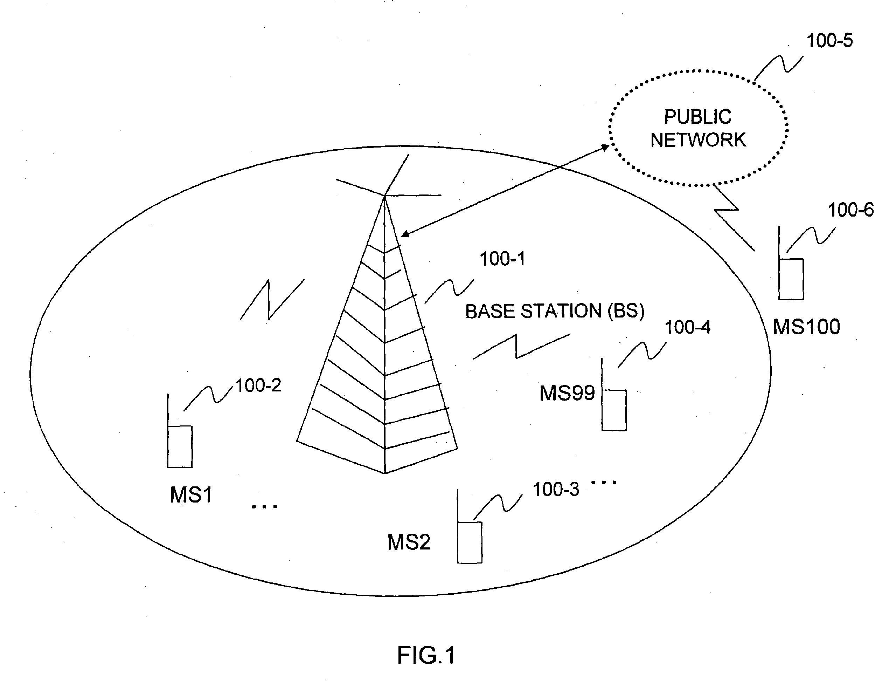

FIG. 1 is a view showing the whole wireless communication system.

The wireless communication system includes, for example, a base station BS 100-1 and wireless terminals (hereinafter referred to as terminals) MS1 100-2 to MS99 100-4. For example, the terminals MS1 100-2, MS2 100-3 and MS99 100-4 exist within a range covered by the base station 100-1. The terminal MS1 or the like can communicate with, for example, a terminal MS100 100-6 within a range covered by another base station through the base station 100-1 and a public network 100-5.

The wireless communication system is an OFDM system adopting, for example, an OFDM wireless access system. The OFDM is Orthogonal Frequency Division Multiplex and is a wireless access system used in a wireless communication system such as a wireless LAN, WiMAX of 3.5G, LTE/UMB of 3.9G, or next-generation PHS.

In the OFDM, a characteristic of a wireless channel is estimated (channel estimation). Since a signal transmitted from a transmitter reaches a receiver by wireless electric wave through wireless space, the transmitted signal is influenced by noise in the wireless space, attenuation in the wireless space and the like. A received signal Y in the receiver is represented by the following expression.

$$Y = H \times X + N$$

Where, Y: received signal, H: channel characteristic, X: transmitted signal, N: noise.

In the receiver, the transmitted signal X is extracted from the received signal Y in a manner as described below.

$$X = Y/H' - N/H'$$

Where, H': estimated value of channel characteristic.

Incidentally, since there is a case where it is difficult to measure the noise N, the transmitted signal X and the noise component are extracted in a manner as described below, and the removal of the noise may be performed by a suitable method.

$$Y/H' = X + N/H'$$

As stated above, in order to extract the transmitted signal, it is necessary to estimate the channel characteristic H. As a method of channel estimation, for example, a pilot is used. The pilot is a signal known in both the transmission side and the reception side. Besides, the pilot is a signal sandwiched between transmitted data signals for the channel estimation. For example, a known pilot signal Xp is transmitted by a transmitter, and when a received signal of a receiver is Yp, $YP = H \times Xp$ is established when the term of noise is neglected. Thus, an estimated value H' = Yp/Xp of the channel characteristic in the receiver is obtained. Here, the known pilot signal Xp is previously stored in the receiver, and can be suitably read. Incidentally, it is assumed that the channel characteristic of data is identical to the channel characteristic of the pilot signal of the same frame, and the estimated value of the channel characteristic obtained from the pilot signal can be used for the extraction of the transmission data.

In this embodiment, the channel estimated value of the present frame is obtained based on the channel estimated value obtained from the past received signal and the channel estimated value obtained from the present received signal. For example, the channel estimated value is made to have continuity, and it is possible to prevent that an estimated error becomes large only in a certain frame.

A specific system function block diagram will be described below.

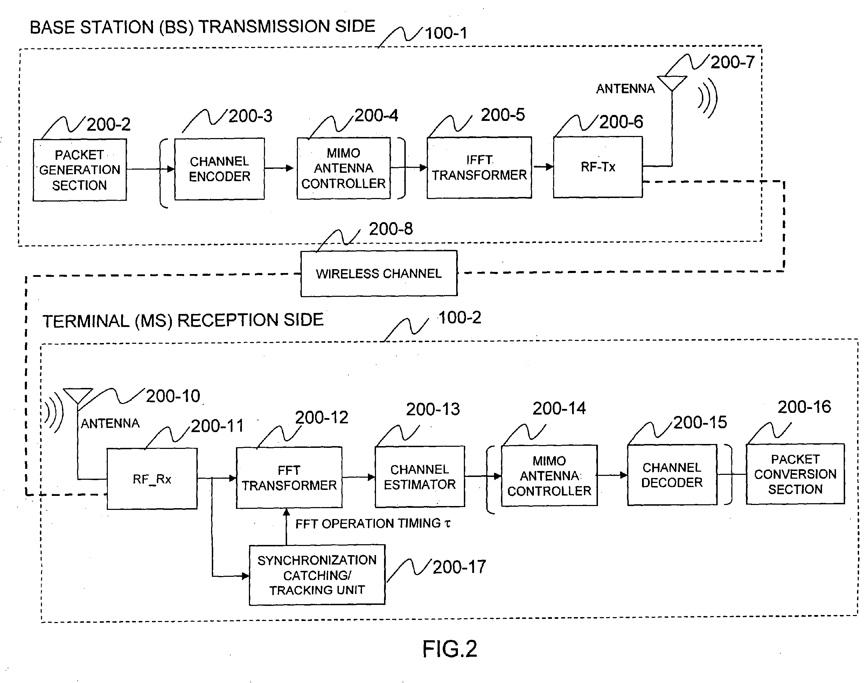

FIG. 2 is a system structural view in a down direction of the wireless communication system using the OFDM.

The base station (BS) 100-1 includes, at the transmission side, for example, a packet generation section 200-2 to generate a packet of a format in which a data stream flow is regulated, a channel encoder 200-3 having an error correction function, a Multiple Input Multiple Output (MIMO) antenna controller 200-4 to increase channel capacity and to obtain a diversity effect, an IFFT transformer (inverse Fourier transformer) 200-5 to convert a signal on a frequency axis into a signal on a time axis, an RF-Tx (wireless transmission section) 200-6 to convert a signal of a base band into a radio frequency signal, and an antenna 200-7 to transmit the radio frequency signal. The transmitted signal is received at the reception side of the terminal through a wireless space channel 200-8.

The terminal (MS)1 100-2 includes, at the reception side, for example, an antenna 200-10 to receive a radio-frequency wireless signal, an RF_Rx (wireless reception section) 200-11 to convert the radio frequency signal into a base band signal, a synchronization catching/tracking unit 200-17 to catch and tract a frame timing of a received signal and a carrier frequency, an FFT transformer (Fourier transformer) 200-12 to convert a signal on a time axis into a signal on a frequency axis at the FFT operation timing acquired by the synchronization catching/tracking unit 200-17, a channel estimator 200-13 to estimate a characteristic of a wireless channel, a MIMO antenna controller 200-14 to demodulate a signal received from each antenna, a channel demodulator 200-15 to demodulate a packet coded at the transmission side, and a packet conversion section 200-16 to convert the packet into a higher layer data stream flow format. Incidentally, the structures of the other terminal MS2 100-3 and the like are also the same.

However, in this embodiment, the channel encoder 200-3 and the MIMO antenna controller 200-4 at the transmission side, and the MIMO antenna controller 200-14 and the channel decoder 200-15 at the reception side may be omitted, and a system not including these also falls within the scope of the embodiment.

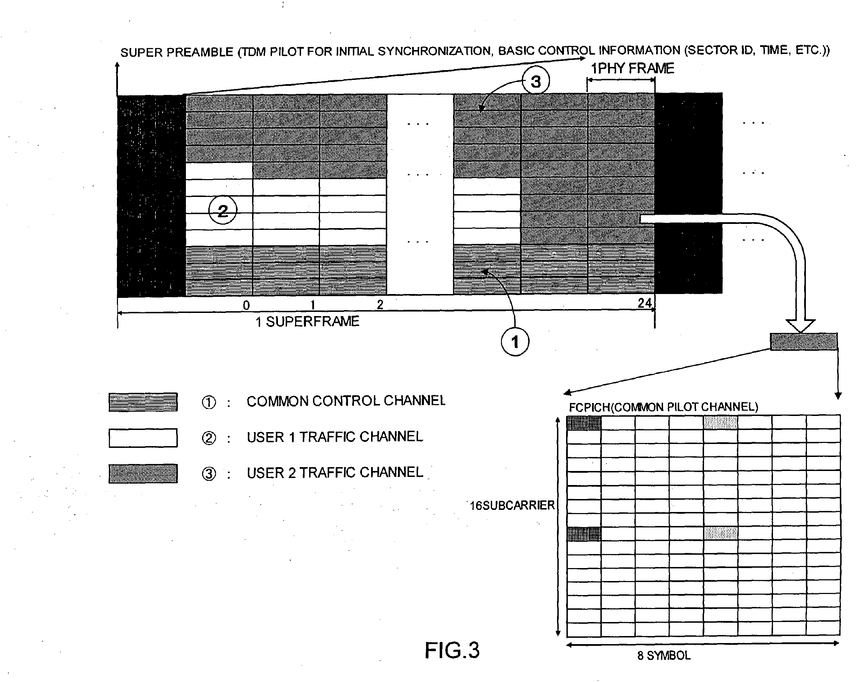

FIG. 3 is an explanatory view of a packet frame format in this embodiment.

A one superframe includes, for example, a superframe preamble and 25 PHY frames (physical frames). In FIG 3, the vertical axis indicates the frequency, and the superframe of a plurality of subcarriers are shown. The superframe preamble is for transmission of, for example, a TDM pilot symbol for initial synchronization, basic control information (sector ID, time) and the like. In the PHY frame, a control channel and a data channel (traffic channel) are used. The control channel is a channel for transmitting control information such as assign information of up/down channels, power control and H-ARQ control. The data channel is a channel for transmitting traffic signals for each user.

In the traffic channel, a data channel is punctured at every 8 (or 16) subcarriers on a frequency axis and at every 4 symbols on a time axis, and a pilot signal of Forward Common Pilot Channel (FCPICH) is arranged. At the reception side, the channel estimation of the data channel can be performed by using the FCPICH and by using an interpolation unit of the frequency axis and the time axis.

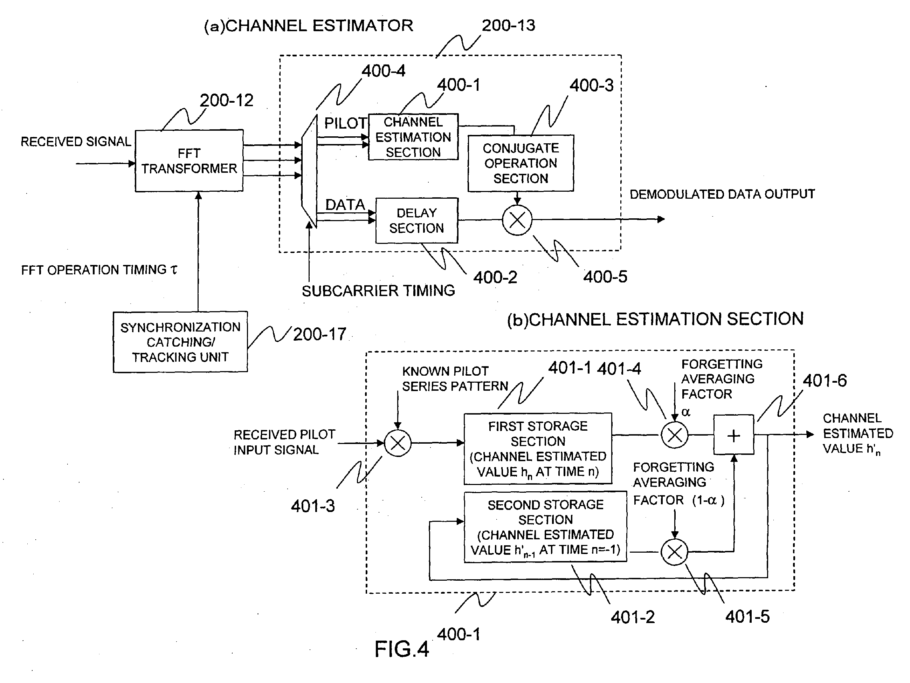

FIG. 4 is a structural view of the channel estimator 200-13 in the OFDM system, which performs channel estimation using forgetting averaging.

The channel estimator 200-13 includes, for example, a channel estimation section 400-1, a delay section 400-2, a conjugate operation section 400-3, a selector (branch unit) 400-4, and a multiplier 400-5.

The FFT transformer 200-12 FFT converts a received signal at the FFT operation timing as the output of the synchronization catching/tracking unit 200-17. At the inlet of the channel estimator 200-13, the pilot signal and the data signal are classified by the selector 400-4. The pilot signal is used in the channel estimation section 400-1. The data signal is delayed by the amount of the channel estimation process by the delay section 400-2, and is multiplied by the conjugate signal of the output of the channel estimation section 400-1, and demodulated data is obtained and is outputted.

FIG. 4B is a view of a specific circuit of the channel estimation section 400-1.

The channel estimation section 400-1 includes, for example, a first storage section 401-1, a second storage section 401-2, multipliers 401-3 to 401-5, and an adder 401-6. The first storage section 401-1 stores, for example, a channel estimated value (first channel characteristic estimated value) $h^n$ at time n, which is obtained by multiplying a pilot input signal received at time n and a known pilot series pattern together by the multiplier 401-3. The second storage section 401-2 stores, for example, a channel estimated value (second channel characteristic estimated value) $h'^{n-1}$ obtained at time n-1. Incidentally, the channel estimated value $h'^{n-1}$ is obtained by using forgetting averaging based on a channel estimated value $h^{n-1}$ at time n-1 obtained by the pilot input signal and a channel estimated value $h'^{n-2}$ obtained at time n-2 and is stored.

The multipliers 401-4 and 401-5 multiply the channel estimated values at time n and n-1 by forgetting averaging factors $\alpha$ and $(1 - \alpha)$, respectively. An addition result obtained by the adder 401-6 is the final channel estimated value $h'^n$ at time n.

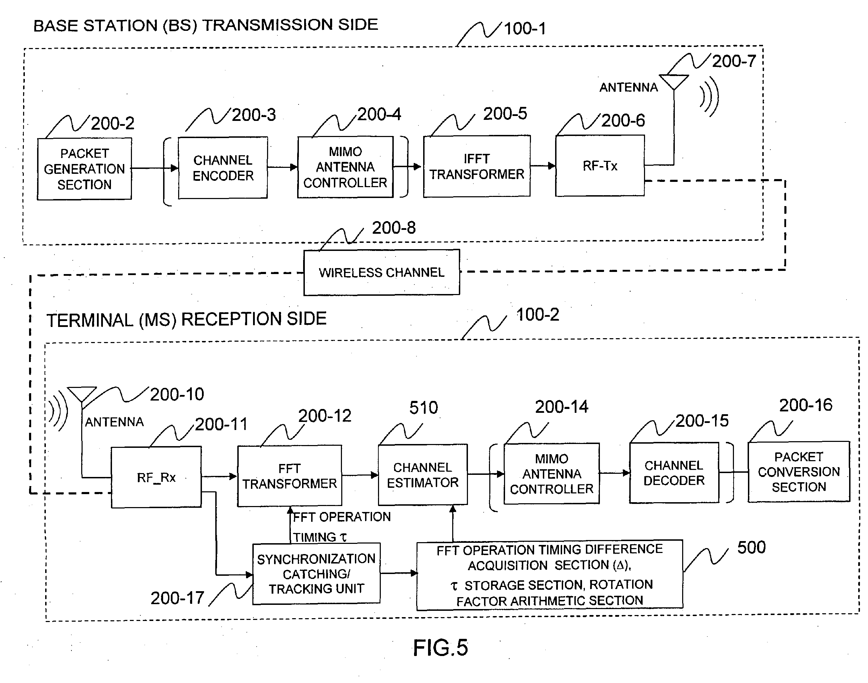

FIG. 5 is a structural view of a down system of the wireless communication system in which a rotation factor is corrected and channel estimation is performed.

In this system, an FFT operation timing ($\tau$) storage section, an FFT operation timing difference acquisition section, and a rotation factor arithmetic section are further provided at the terminal of the down system function block shown in FIG. 2.

The FFT operation timing storage section records, for example, an FFT operation timing $\tau$ as an output of a synchronization catching/tracking unit 200-17 at a fixed interval. The FFT operation timing difference acquisition section calculates a change amount $\Delta$ of the FFT operation timing. The rotation factor arithmetic section uses the past channel estimated value and calculates the rotation factor (phase rotation amount) used for the arithmetic operation of the forgetting averaging. Here, the change amount of the FFT operation timing is, for example, a time difference between the time when an FFT transform is performed for obtaining the past channel estimated value and the time when an FFT transform is performed for obtaining the present channel estimated value.

However, the rotation factor arithmetic section is included in the channel estimation section 600-1, and the FFT operation timing difference acquisition section may deliver a parameter of specifying the factor to the channel estimation section 600-1. It is apparent that the effect of the embodiment is not changed even if such modification is performed, and the latter also falls within the scope of the embodiment.

A channel estimator 510 performs channel estimation in accordance with the rotation factor. In this embodiment, for example, the data channel of the received newest PHY frame is demodulated. That is, a channel estimated value $h'^{n+1}(w)$ is used to demodulate data $d^{n+1}(w)$.

However, when the forgetting averaging is performed in the OFDM system, there is a problem that phase rotation of $\exp(jw\tau)$ occurs by the expression (2), and the phase rotation amount varies according to the change of the FFT operation timing. Accordingly, when it is assumed that the FFT operation timing is changed from $\tau$ to $\tau + \Delta$ at the time point of time n+1, from the expression (2), the channel estimated value at time n+1 becomes as follows:

$$h'^{n+1}(w) = \alpha\, h^{n+1}(w) e^{(jw\tau)} e^{(jw\Delta)} + (1-\alpha) h'^n(w) \quad (3)$$

From the comparison between the expression (2) and the expression (3), when the FFT operation timing is changed from or to $\tau + \Delta$, the phase rotation difference between the channel estimated value at time n+1 and the channel estimated value at past time n is $e^{jw\Delta}$. Accordingly, when the past channel estimated value is corrected by the rotation factor $e^{jw\Delta}$, the phase rotation amount at time n and that at time n+1 become equal to each other.

The channel estimated value after the correction by the rotation factor becomes expression (4).

$$h'^{n+1}(w) = \alpha\, h^{n+1}(w) e^{(jw\tau)} e^{(jw\Delta)} + (1-\alpha) h'^n(w) e^{(jw\Delta)} \quad (4)$$

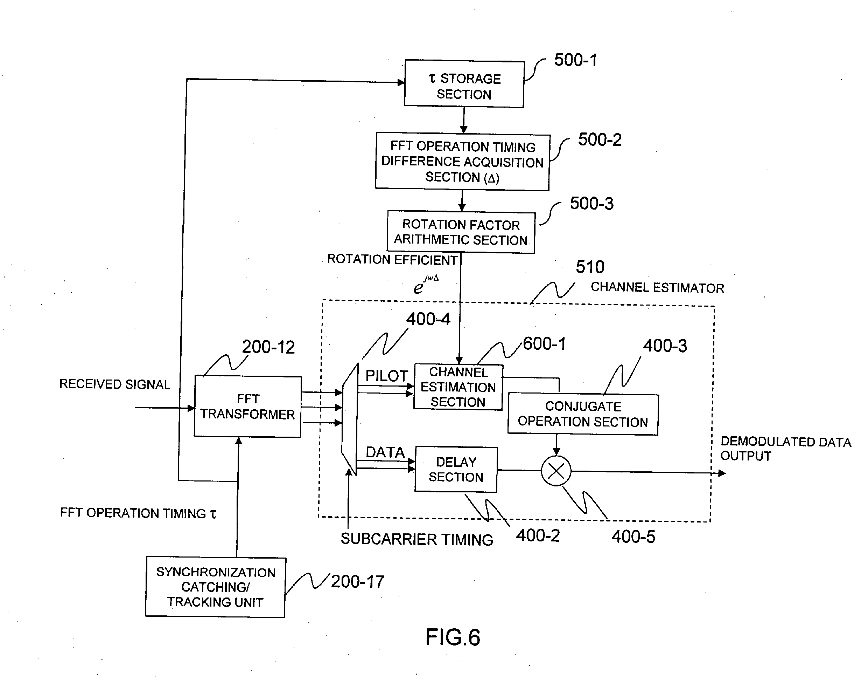

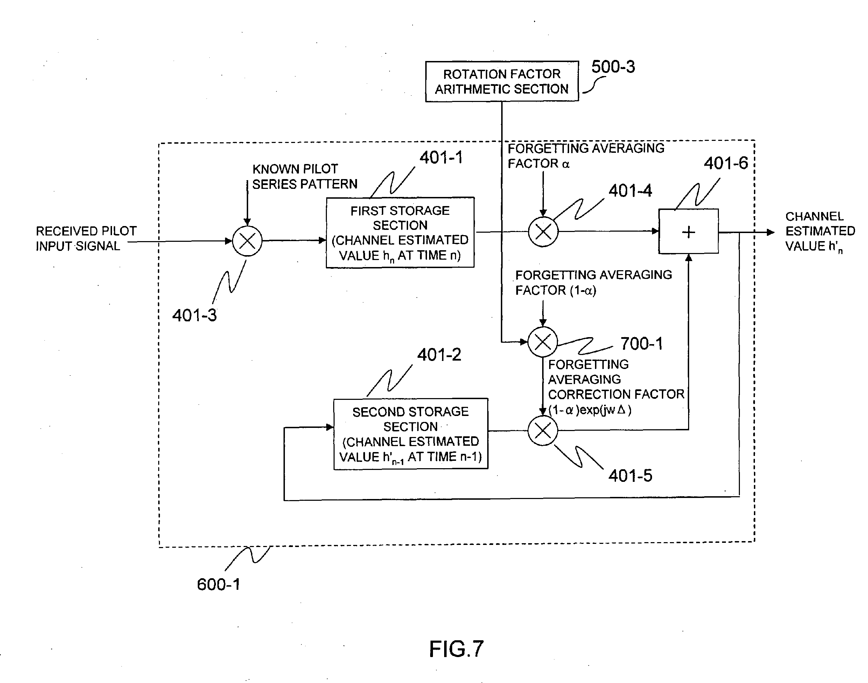

FIG. 6 is a structural view (1) of the channel estimator 510 to correct the rotation factor and to perform the channel estimation. FIG. 7 is a structural view of a channel estimation section.

A block similar to that of FIG. 4 is denoted by the same reference numeral and its detailed explanation will be omitted.

As shown in FIG. 7, a channel estimator 600-1 further includes a multiplier 700-1. The multiplier 700-1 multiplies a forgetting averaging factor 1-$\alpha$ by an inputted rotation factor to obtain a forgetting averaging correction factor, and outputs it to a multiplier 401-5.

A multiplier 401-3 of the channel estimation section 600-1 multiplies a received pilot signal by a known pilot pattern, and a channel estimated value at time n is obtained. The adder 401-6 adds a value obtained by multiplying the channel estimated value at time n and the forgetting averaging factor $\alpha$ together by the multiplier 401-4 and a value obtained by multiplying the channel estimated value at past time n-1 and the forgetting averaging correction factor of the combination of the rotation factor and the forgetting averaging factor together by the multiplier 401-5. The addition result becomes the final channel estimated value at time n.

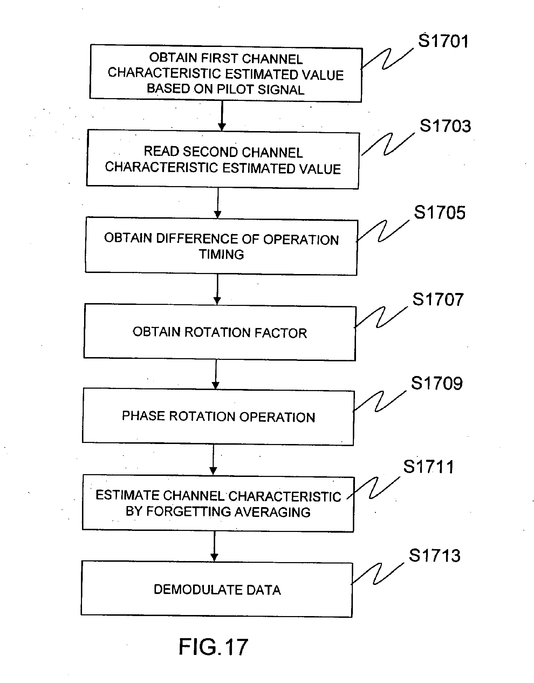

FIG. 17 is a flowchart of the channel characteristic estimation at a wireless terminal.

The wireless terminal obtains a first channel characteristic estimated value based on a pilot signal included in a received signal at a first operation timing of the FFT transformer 200-12 (S1701). The wireless terminal reads a second channel characteristic estimated value estimated at a second operation timing older than the first operation timing and stored in the second storage section 401-2 (S1703). The wireless terminal obtains a difference between the first operation timing and the second operation timing (S1705). The wireless terminal obtains the rotation factor for phase rotation operation based on the difference (S1707). The wireless terminal performs a phase rotation operation on the second channel characteristic estimated value by the obtained rotation factor (S1709). The wireless terminal estimates the channel characteristic of the wireless channel by the forgetting averaging of the operation result of step S1709 and the first channel characteristic estimated value (S1711). The wireless terminal demodulates the data transmitted by the base station based on the received signal and the estimated channel characteristic (S1713).

**Modified example of the first embodiment**

In this system, the data channel one frame before the received newest PHY frame may be demodulated. It is assumed that the FFT operation timing is changed from $\tau$ to $\tau+\Delta$ at the time point of time n+1. Here, as a result that an interpolation operation on the time axis is performed by channel estimated values $h^n(w)$ and $h^{n+1}(w)$, the channel estimated value $h'^{n+1}(w)$ is used to demodulate $d^n(w)$.

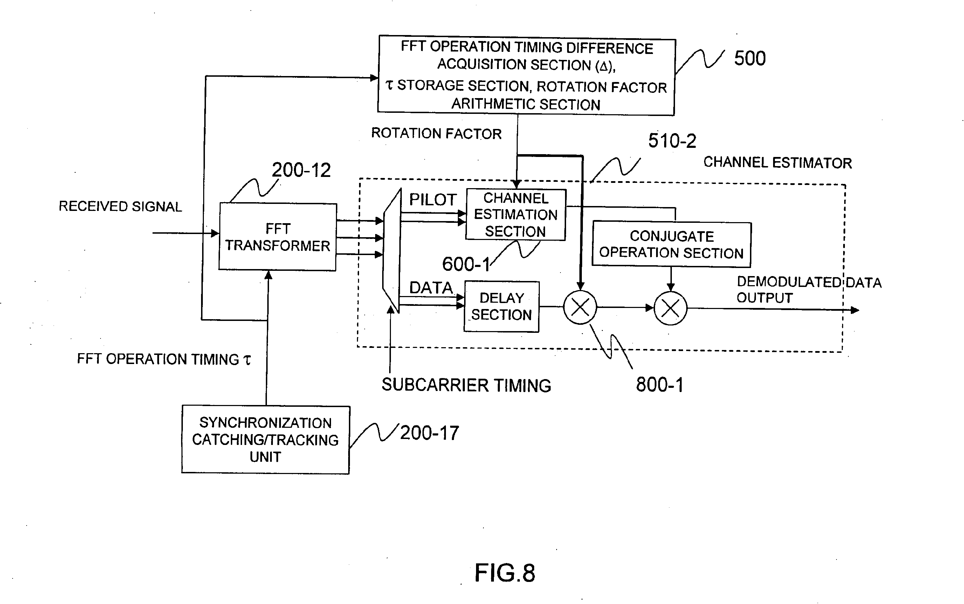

In this modified example, since the past channel estimated value $h^n(w)$ is corrected by the rotation factor $e^{jw\Delta}$, the phase rotation amount per subcarrier of the pilot channel signal for channel estimation corresponding to $d^n(w)$ is $e^{jw(\tau+\Delta)}$. However, the phase rotation amount per subcarrier of the data channel signal at time n is $e^{jw\tau}$. For correct demodulation of the data channel, the data channel and the pilot channel must have the same phase rotation amount. Accordingly, in this modified example, as shown in FIG. 8 shown later, the data channel is also corrected by the same rotation factor as the channel estimated value.

FIG. 8 is a structural view (2) of a channel estimator.

A channel estimator 510-2 further includes a multiplier 800-1 to multiply data from a delay section 400-2 by a rotation factor from a rotation factor arithmetic section 500-3. However, also in this modified example, even when the rotation factor arithmetic section 500-3 and the like are included in a channel estimation section 600-1, and an FFT operation timing difference acquisition section 500-2 delivers a parameter of specifying the factor, it is apparent that the effect of the embodiment is not changed, and the latter also falls within the scope of the embodiment.

**2. Second embodiment**

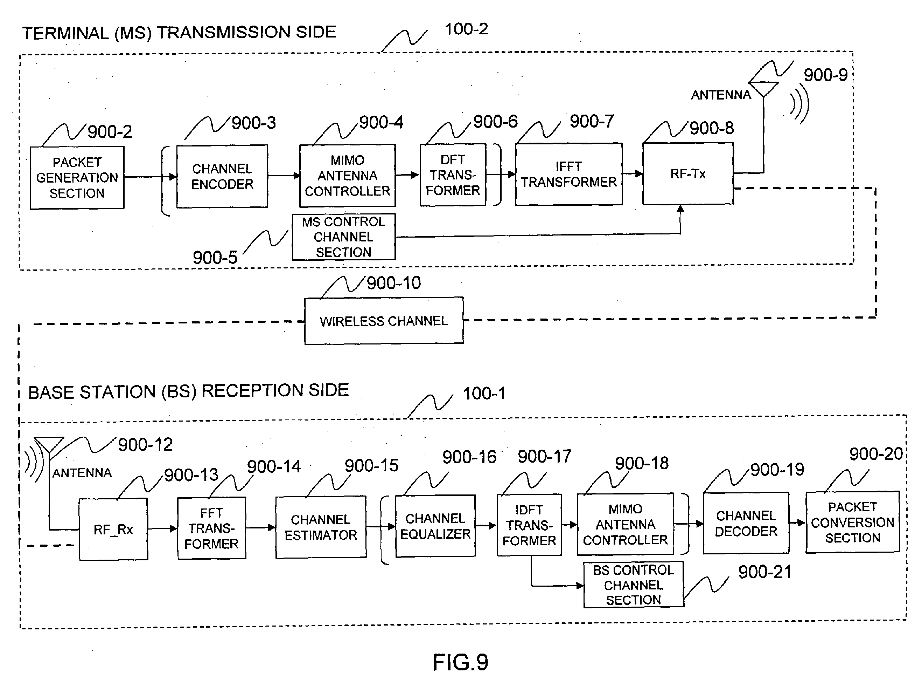

FIG. 9 is a system structural view in an up direction of the wireless communication system using the OFDM.

At the transmission side, a terminal (MS) includes a packet generation section 900-2 to generate a packet of a format in which a data stream flow is regulated, a channel encoder 900-3 having an error correction function, a MIMO antenna controller 900-4 to increase channel capacity and to obtain a diversity effect, an MS control channel section 900-5 to control transmission timing of the terminal MS and to perform power control, a DFT transformer 900-6 to perform a DFT (Discrete Fourier Transform) operation, an IFFT transformer 900-7 to convert a signal on a frequency axis into a signal on a time axis, an RF-Tx (wireless transmission section) 900-8 to convert a signal of a base band into a radio frequency signal, and an antenna 900-9 to transmit a radio frequency signal. Although FIG. 9 shows the terminal MS1 100-2, the structure of another terminal is also the same. A transmitted signal is received at the reception side of the base station 100-1 through a wireless space channel 900-10.

The base station (BS) 100-1 includes, at the reception side, an antenna 900-12 to receive a radio frequency wireless signal, an RF_Rx (wireless reception section) 900-13 to convert a radio frequency signal into a base band signal, an FFT transformer 900-14 to convert a signal on a time axis into a signal on a frequency axis, a channel estimator 900-15 to estimate a characteristic of the wireless channel, a channel equalizer to equalize distortion of the channel, an IDFT (Inverse Discrete Fourier Transform) transformer 900-17, a BS control channel section 900-21, a MIMO antenna controller 900-18 to demodulate a signal received from each antenna, a channel decoder 900-19 to perform decoding as a reverse operation of the channel encoder performed at the transmission side, and a packet conversion section 900-20 to convert a packet into a higher data stream flow.

However, in this embodiment, the channel encoder 900-3, the DFT transformer 900-6, and the MIMO antenna controller 900-4 at the transmission side, and the IDFT transformer 900-17, the channel equalizer 900-16, the MIMO antenna controller 900-18, and the channel decoder 900-19 at the reception side may be omitted. A system not including these also falls within the scope of the embodiment.

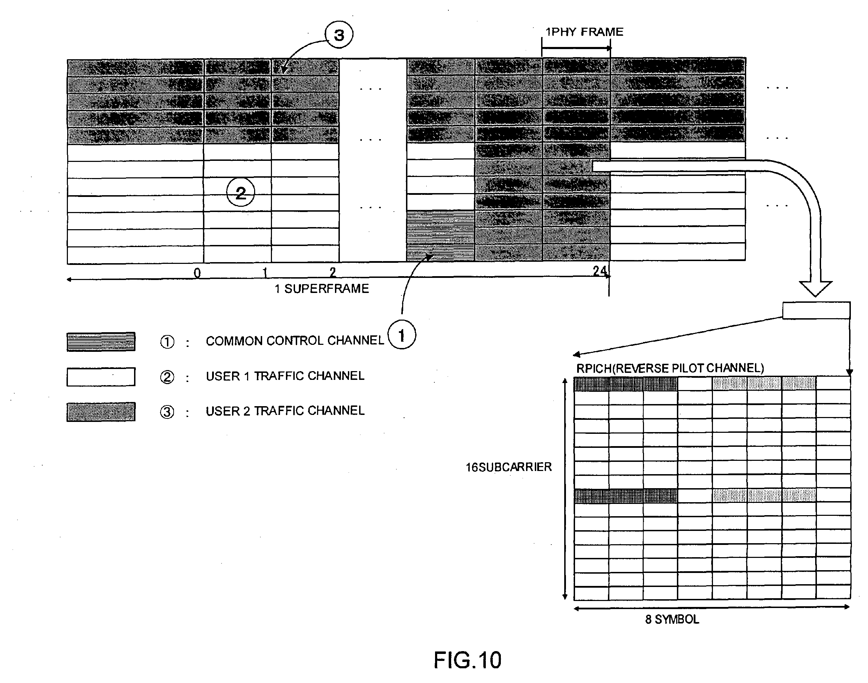

FIG. 10 shows a frame format of an up packet.

Differently from the down system packet frame, a one superframe does not have a superframe preamble, and has 25 PHY frames. A control channel and a data channel (traffic channel) are used in the PHY frame. The data channel is a channel to transmit a traffic signal for each user. A reverse pilot channel (RPICH) for up channel estimation punctures the traffic channel and is arranged, for example, as shown in FIG. 10.

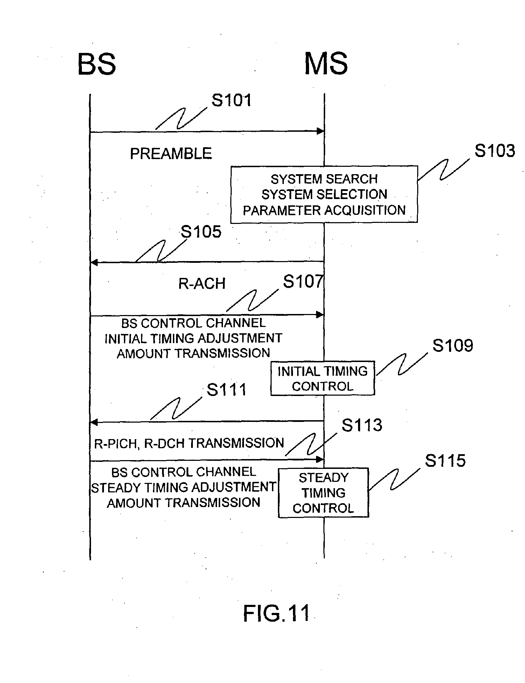

FIG. 11 is a sequence view of an up time alignment.

The terminal (MS) acquires a system parameter from a superframe preamble symbol of a down superframe transmitted by the base station (BS), and transmits a Reverse Access Channel (R-ACH) for initial synchronization to the base station (S101 to S105). The base station detects the R-ACH signal, and transmits a signal of an initial timing adjustment amount by the BS control channel section 900-21 (S107). The terminal acquires an up transmission timing offset received by the MS control channel section 900-5, and adjusts an up initial transmission timing offset (S109). Thereafter, the terminal transmits an up pilot channel (R-PICH) and a data channel (R-DCH) to the base station (S111). The base station detects a pilot signal, and transmits a steady timing adjustment amount by the BS control channel section 900-21 (S113). The terminal receives the steady timing adjustment amount by the MS control channel section 900-10, and performs steady timing control (S115). For example, the MS control channel section 900-5 extracts a timing adjustment amount Δ from the received signal, and delivers it to the RF-Tx 900-8. The RF-Rx 900-8 adjusts the delay amount of a transmission buffer in accordance with the timing adjustment amount.

The sequence operation of the terminal and the base station is called time alignment. The FFT operation timing of the FFT transformer 900-14 at the reception side of the up base station is operated at a determined timing. The adjustment of the transmission timing of the transmission side by the time alignment of the up terminal corresponds to the change of the down FFT operation timing. In this embodiment, the time alignment is performed at a certain constant cycle and at a previously determined timing in the superframe.

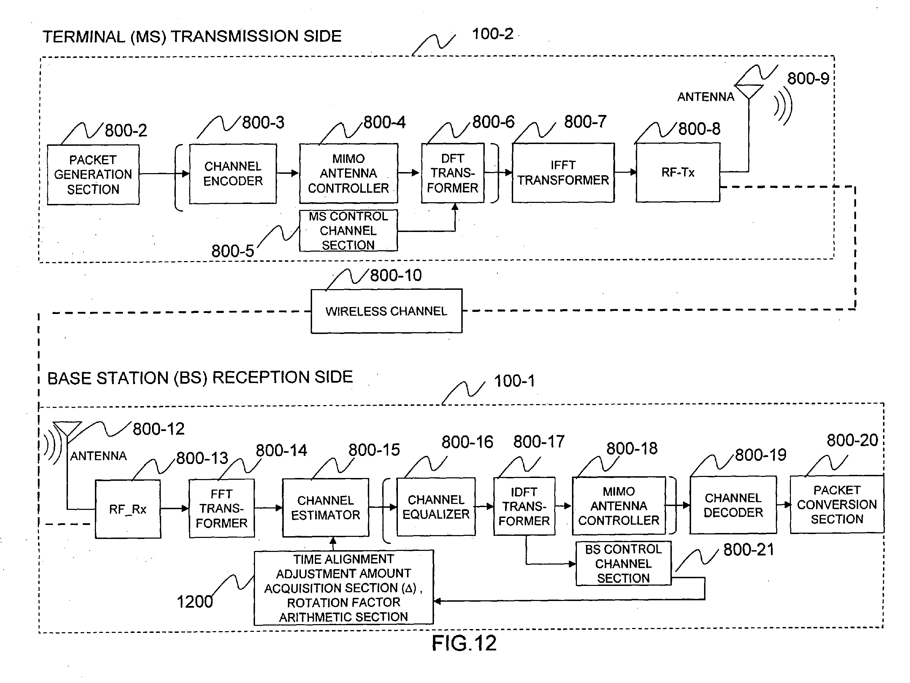

FIG. 12 is an up system structural view of a wireless communication system in which correction is performed by a rotation factor and channel estimation is performed.

A base station 100-1 includes a time alignment adjustment amount acquisition section and a rotation factor arithmetic section in addition to the system of FIG. 9. The other structures are the same as those of the system of FIG. 9.

In this embodiment, a data channel of an up received newest PHY frame is demodulated. A channel estimator 800-15 uses a channel estimated value $h'^{n+1}(w)$ and demodulates data $d^{n+1}(w)$.

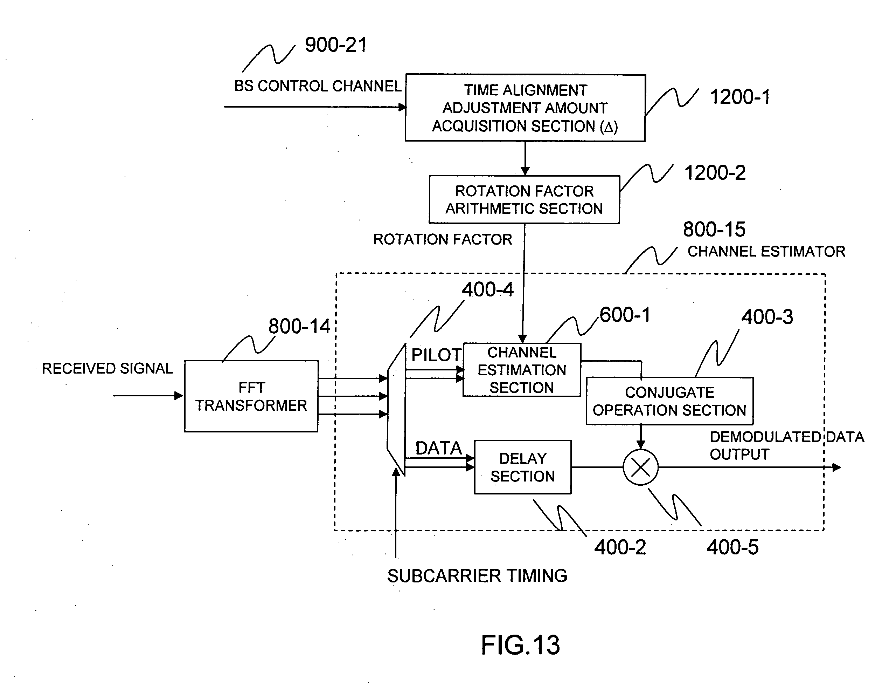

FIG. 13 is an explanatory view of channel estimation in this embodiment.

A time alignment adjustment amount acquisition section 1200-1 acquires an adjustment amount (A) of time alignment at the reception side of the base station 100-1. A rotation factor arithmetic section 1200-2 calculates a rotation factor based on the time alignment adjustment amount (Δ). Here, the time alignment adjustment amount (Δ) represents a shift between a timing of transmission of the terminal and a desired timing of reception of the base station.

When the time alignment adjustment is assumed to be A, a rotation factor for correction of a past channel estimated value is $e^{jw\Delta}$. The channel estimator 800-15 is similar to that of the first embodiment. Besides, as a channel estimation section 600-1, a circuit similar to that of FIG. 7 can be used.

Incidentally, even when the rotation factor arithmetic section 1200-2 is included in the channel estimation section 600-1, and the time alignment adjustment amount acquisition section 1200-1 delivers a parameter to specify the factor, it is apparent that the effect of the embodiment is not changed, and the latter also falls within the scope of the embodiment.

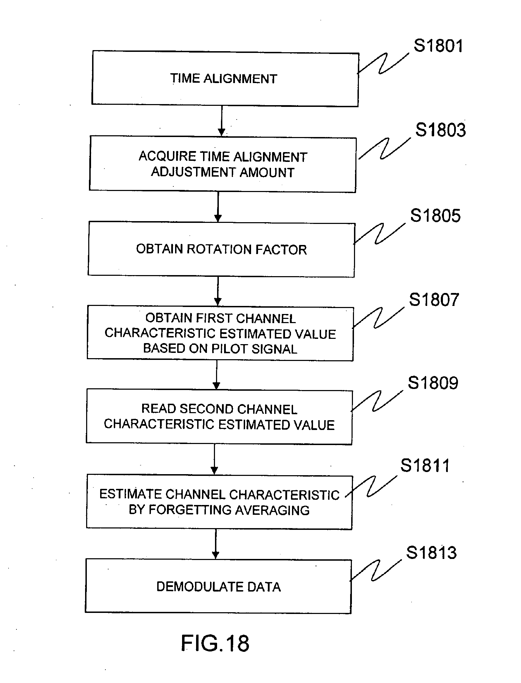

FIG. 18 is a flowchart (1) of channel characteristic estimation in the base station.

The base station outputs a time alignment adjustment amount to a wireless terminal, and performs a time alignment to adjust a packet transmission timing at the wireless terminal (S1801). The base station acquires the time alignment adjustment amount (S1803). The base station obtains a rotation factor for a phase rotation operation based on the acquired time alignment adjustment amount (S1805). The base station obtains a first channel characteristic estimated value based on a pilot signal included in a received signal of a first operation timing of the FFT transformer 800-14 (S1807). The base station reads a second channel characteristic estimated value which is estimated at a second operation timing older than the first operation timing and is stored in the second storage section 401-2 (S1809). The base station performs the phase rotation operation on the second channel characteristic estimated value by using the rotation factor obtained at step S1805, and estimates the channel characteristic of the wireless channel by forgetting averaging of the operation result and the first channel characteristic estimated value (S1811). The base station demodulates data transmitted by the base station based on the received signal and the estimated channel characteristic (S1813).

(Control of forgetting averaging execution timing)

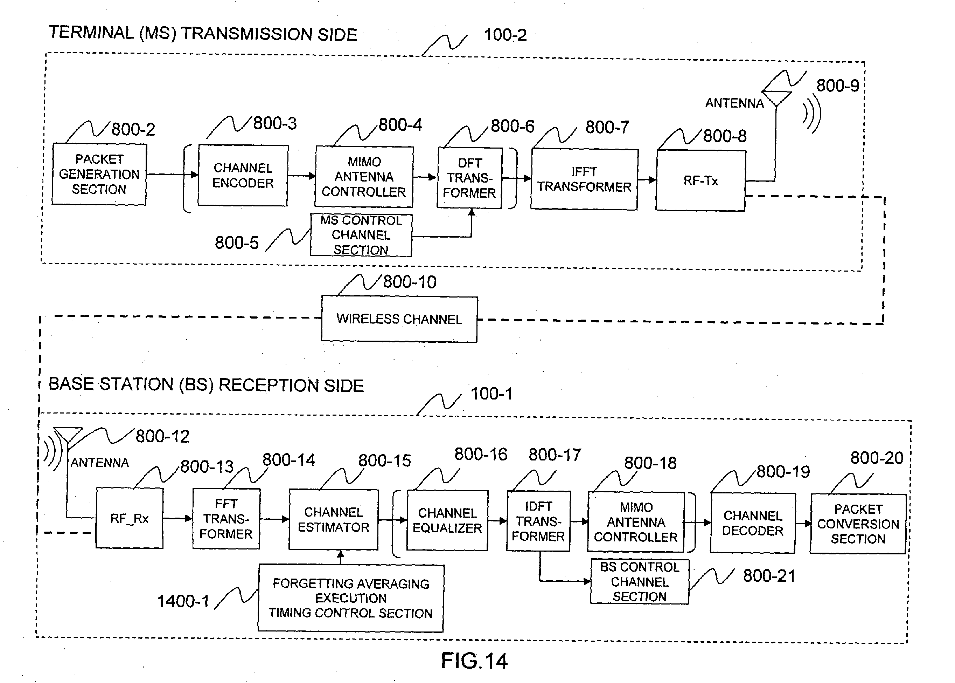

FIG. 14 is a system structural view of a wireless communication system in which the timing of forgetting averaging execution is controlled.

As compared with the system of FIG. 9, a forgetting averaging execution timing control section 1400-1 is further included.

As expressed by the expression (2), the change of the FFT operation timing becomes a cause of an error of a reception side channel estimated value. In the up system, the change of the terminal transmission timing causes the error of the reception side channel estimated value.

In the system shown in FIG 14, in order to protect against damage of the forgetting averaging error caused by the change of the transmission timing of the terminal, the forgetting averaging execution timing control section 1400-1 performs control so that the forgetting averaging is not performed on the PHY frame corresponding to the timing when the up time alignment is executed.

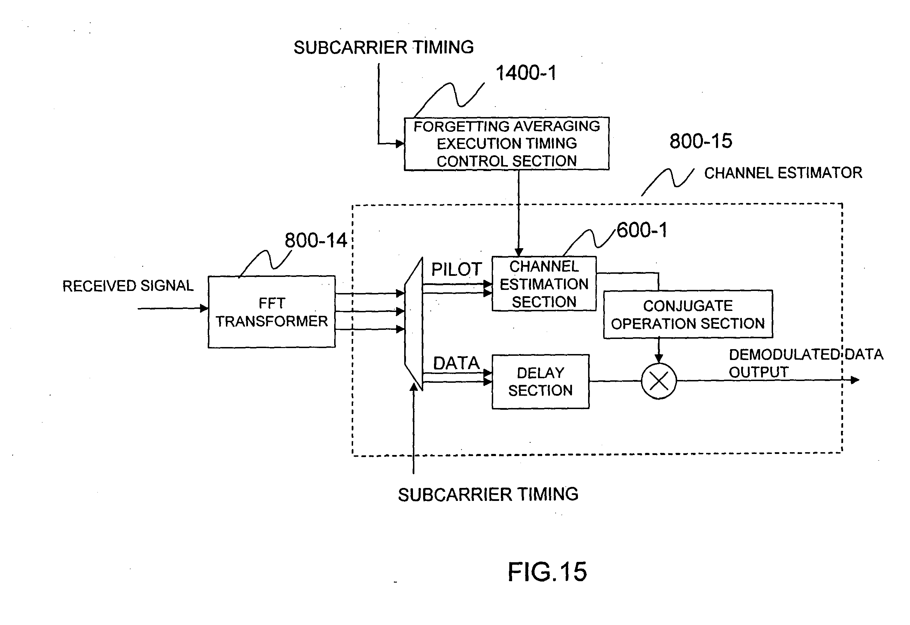

FIG. 15 is an explanatory view of timing control of forgetting averaging execution.

The forgetting averaging execution timing control section 1400-1 has a function to control the time of channel estimation of forgetting averaging except the transmission timing change time of the up terminal. A channel estimator 800-15 is similar to that of the first embodiment. Besides, a channel estimation section 600-1 is similar to that of FIG. 7.

For example, it is assumed that the time alignment is performed at time n+1. The forgetting averaging is not performed at that time, and corresponding data $d^{n+1}(w)$ is demodulated by using a channel estimated value $h^{n+1}(w)$ obtained based on a pilot. The forgetting averaging is not performed at time n+1 by the forgetting averaging execution timing control section 1400-1. When this is expressed by an expression, α is made 1, and expression (5) is obtained.

$$h'^{n+1}(w) = h^{n+1}(w) \tag{5}$$

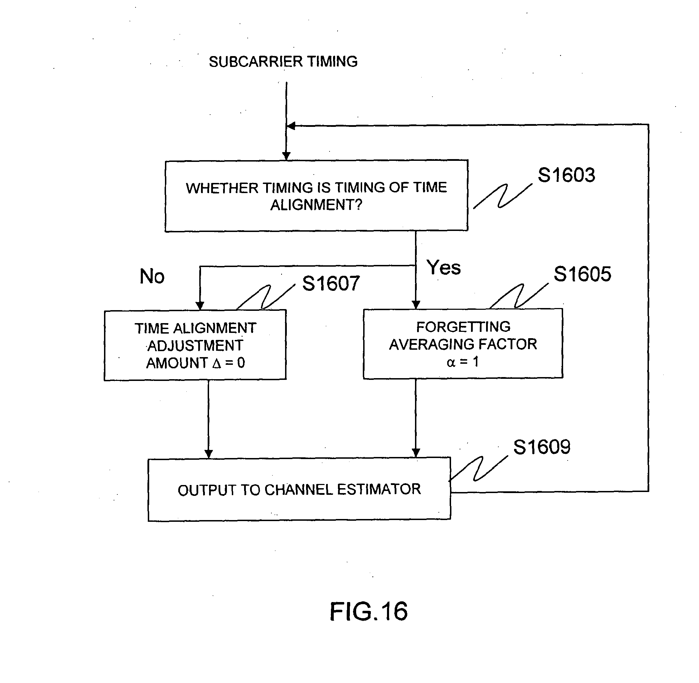

FIG. 16 shows a flowchart of the forgetting averaging execution timing control section.

The forgetting averaging execution timing control section 1400-1 monitors an input subcarrier timing. The forgetting averaging execution timing control section 1400-1 determines, based on the subcarrier timing, whether a timing is a time alignment timing or not (S1603). When the timing is the time alignment timing (S1603, Yes), the forgetting averaging factor $\alpha$ is set to 1 (S1605), and is outputted to a channel estimator 800-15 (S1609). On the other hand, when the timing is not the time alignment timing (S1603, No), the time alignment adjustment amount A is set to 0 (S1607), and is outputted to the channel estimator 800-15 (S1609).

The channel estimator 800-15 appropriately selects $\alpha$ or $\Delta$ inputted from the forgetting averaging execution timing control section 1400-1, or previously set $\alpha$ or $\Delta$ and estimates the channel.

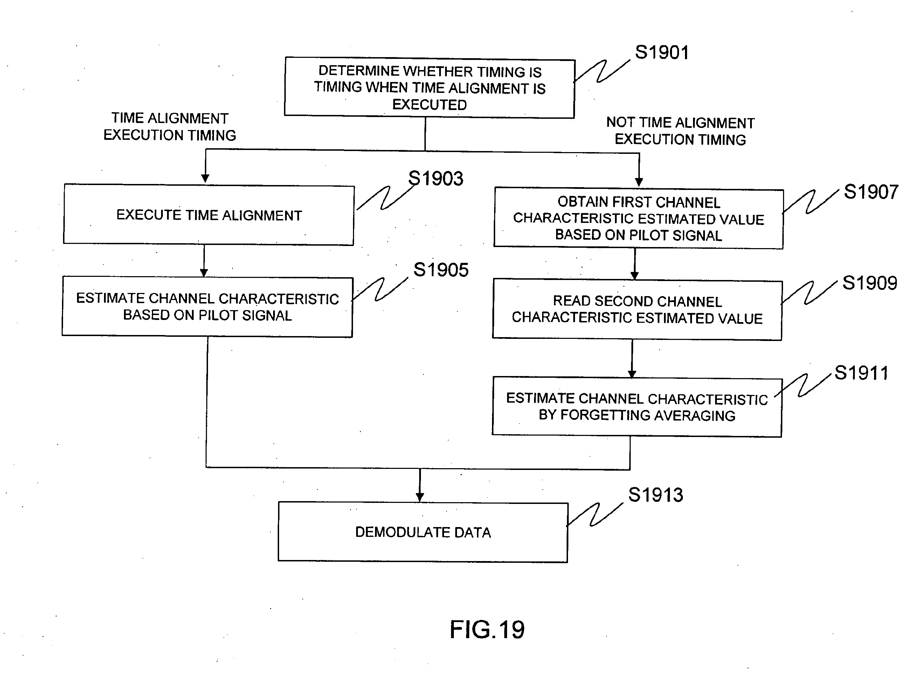

FIG. 19 is a flowchart (2) of channel characteristic estimation in the base station.

The base station determines whether the timing is the timing when the time alignment is executed (S1901). At the timing when the time alignment is executed (S1901), the base station outputs a time alignment adjustment amount to the wireless terminal, and executes the time alignment to adjust the packet transmission timing of the wireless terminal at the previously determined timing (S1903). Besides, the base station estimates the channel characteristic of a wireless channel based on a pilot signal included in a received signal (S1905). Thereafter, shift is made to step S1913.

On the other hand, at the timing when the time alignment is not performed (S1901), the base station obtains a first channel characteristic estimated value based on the pilot signal included in the received signal of the first operation timing (S1907). Besides, the base station reads a second channel characteristic estimated value which is estimated at a second operation timing older than the first operation timing and is stored in the second storage section 401-2 (S1909). The base station estimates the channel characteristic of the wireless channel by forgetting averaging of the first channel characteristic estimated value and the second channel characteristic estimated value (S1911). Thereafter, shift is made to step S1913.

At step S1913, the base station demodulates the data transmitted by the base station based on the received signal and the estimated channel characteristic (S1913).

Incidentally, as the base station, the structure of FIG 12 and the structure of FIG. 14 may be combined. For example, the base station may include the time alignment adjustment amount acquisition section 1200-1, the rotation factor arithmetic section 1200-2, and the forgetting averaging execution timing control section 1400-1. For example, at step S1607 of FIG. 16, instead of $\Delta = 0$, the time alignment adjustment amount ($\Delta$) acquired by the time alignment adjustment amount acquisition section 1200-1 may be used, or the rotation factor obtained by the rotation factor arithmetic section 1200-2 may be outputted.

3. Others

The first and the second embodiments and individual features thereof may be combined and used. For example, the wireless communication system can be configured such that the structure of the first embodiment is adopted in the down direction, and the structure of the second embodiment is adopted in the up direction.

The present invention can be used for, for example, a wireless terminal, a base station, a wireless communication system and the like, in which the OFDM is used as the wireless communication system.

**Claims**

1. A wireless terminal in a wireless communication system in which communication is performed between the wireless terminal (100-2) and a base station (100-1) by orthogonal frequency division multiplex, comprising:

   a Fourier transformer (200-12) to Fourier-transform a received signal from the base station (100-1) at a determined operation timing;
   a synchronization catching/tracking unit (200-17) to determine the operation timing of the Fourier transformer (200-12) from the received signal; and
   a channel estimator (200-13) to estimate a channel characteristic of a wireless channel between the wireless terminal (100-2) and the base station (100-1) and to demodulate data transmitted by the base station (100-1) from the received signal and the estimated channel characteristic,

wherein the channel estimator (200-13)
obtains a first channel characteristic estimated value based on a pilot signal included in the received signal of a first operation timing of the Fourier transformer (200-12),
reads a second channel characteristic estimated value estimated at a second operation timing older than the first operation timing and stored, and
estimates the channel characteristic of the wireless channel by forgetting averaging of the first channel characteristic estimated value and the second channel characteristic estimated value.

2. The wireless terminal according to claim 1, further comprising:

an operation timing difference acquisition section (500) to obtain a difference between the first operation timing and the second operation timing; and
a rotation factor arithmetic section (500-3) to obtain a rotation factor for a phase rotation operation based on the difference,

wherein
the channel estimator (200-13) performs the phase rotation operation on the second channel characteristic estimated value by using the rotation factor obtained by the rotation factor arithmetic section (500-3), and estimates the channel characteristic of the wireless channel by forgetting averaging of a result of the phase rotation operation and the first channel characteristic estimated value.

3. The wireless terminal according to claim 2, further comprising
an operation timing storage section (500) to store at least the second operation timing determined by the synchronization catching/tracking unit (200-17),
wherein the operation timing difference acquisition section (500) obtains the difference between the first operation timing determined by the synchronization catching/tracking unit (200-17) and the second operation timing stored in the operation timing storage section (500).

4. The wireless terminal according to claim 2 or 3, wherein
the rotation factor arithmetic section (500-3) multiplies the difference obtained by the operation timing difference acquisition section (500) by a frequency of each subcarrier, performs an exponential operation based on a multiplication result and obtains the rotation factor.

5. The wireless terminal according one of claims 2 to 4, wherein the channel estimator (200-13) includes:

a separator (400-4) to separate the pilot signal included in the received signal from the data;
a channel estimation section (510) to input the pilot signal separated by the separator and the rotation factor from the rotation factor arithmetic section (500-3) and to estimate the channel characteristic of the wireless channel;
a conjugate operation section (400-3) to perform a conjugate operation on the channel characteristic of the first operation timing estimated by the channel estimation section (510);
a delay section (400-2) to delay the data of the first operation timing, which is separated by the separator (400-4), by a processing time of the channel estimation section (510); and
a multiplication section to multiply an output of the conjugate operation section (400-3) by an output of the delay section (400-2) to demodulate the data included in the received signal of the first operation timing.

6. The wireless terminal according to one of claims 2 to 5, wherein the channel estimator (200-13) includes:

a separator (400-4) to separate the pilot signal included in the received signal from the data;
a channel estimation section (400-1) to input the pilot signal separated by the separator (400-4) and the rotation factor from the rotation factor arithmetic section (500-3) and to estimate the channel characteristic of the wireless channel;
a conjugate operation section (400-3) to perform a conjugate operation on the channel characteristic of the first operation timing estimated by the channel estimation section (400-1);
a delay section (400-2) to delay the data of the second operation timing separated by the separator (400-4) until the first operation timing;
a first multiplier to perform a phase rotation operation on the data of the second operation timing delayed by the delay section (400-2) by using the rotation factor obtained by the rotation factor arithmetic section (500-3); and

a second multiplier (400-5) to multiply an output of the conjugate operation section (400-3) by an output of the first multiplier to demodulate the data included in the received signal of the second operation timing.

7. The wireless terminal according to claim 2, wherein
the channel estimator (200-13) includes a storage section (401-1, 401-2) to store the estimated channel characteristic.

8. A base station (100-1) in a wireless communication system in which communication is performed between a wireless terminal and the base station (100-1) by orthogonal frequency division multiplex, comprising:

a Fourier transformer (200-12) to Fourier-transform a received signal from the wireless terminal (100-2) at each operation timing;
a timing control section (1400-1) to output a time alignment adjustment amount to the wireless terminal (100-2) and to adjust a packet transmission timing of the wireless terminal (100-2);
a time alignment adjustment amount acquisition section (1200-1) to acquire the time alignment adjustment amount from the timing control section;
a rotation factor arithmetic section (500-3) to obtain a rotation factor for a phase rotation operation based on the time alignment adjustment amount acquired by the time alignment adjustment amount acquisition section (1200-1); and
a channel estimator (200-13) to estimate a channel characteristic of a wireless channel between the wireless terminal and the base station (100-1) and to demodulate data transmitted by the wireless terminal (100-2) based on the received signal and the estimated channel characteristic,

wherein the channel estimator (200-13)
obtains a first channel characteristic estimated value based on a pilot signal included in the received signal of a first operation timing,
reads a second channel characteristic estimated value estimated at a second operation timing older than the first operation timing and stored, and
performs the phase rotation operation on the second channel characteristic estimated value by using the rotation factor obtained by the rotation factor arithmetic section (500-3), and estimates the channel characteristic of the wireless channel by forgetting averaging of a result of the phase rotation operation and the first channel characteristic estimated value.

9. A base station (100-1) in a wireless communication system in which communication is performed between a wireless terminal (100-2) and the base station (100-1) by orthogonal frequency division multiplex, comprising:

a Fourier transformer (800-14, 900-14) to Fourier-transform a received signal from the wireless terminal (100-2) at each operation timing;
a timing control section to output a time alignment adjustment amount to the wireless terminal (100-2) and to perform, at a previously determined timing, a time alignment of adjusting a packet transmission timing of the wireless terminal (100-2);
a forgetting averaging execution timing control section (1400-1) to determine whether a timing is a timing when the timing control section executes the time alignment; and
a channel estimator (800-15) to estimate a channel characteristic of a wireless channel between the wireless terminal (100-2) and the base station (100-1) and to demodulate data transmitted by the wireless terminal (100-2) based on the received signal and the estimated channel characteristic,

wherein at the timing when the time alignment is performed, the channel estimator (800-15) estimates the channel characteristic of the wireless channel based on a pilot signal included in the received signal, and
wherein at the timing when the time alignment is not performed,
the channel estimator (800-15, 900-15)
obtains a first channel characteristic estimated value based on the pilot signal included in the received signal of a first operation timing,
reads a second channel characteristic estimated value estimated at a second operation timing older than the first operation timing and stored, and
estimates the channel characteristic of the wireless channel by forgetting averaging of the first channel characteristic estimated value and the second channel characteristic estimated value.

10. The base station (100-1) according to claim 9, further comprising:

a time alignment adjustment amount acquisition section (1200) to acquire the time alignment adjustment amount from the timing control section; and

a rotation factor arithmetic section (500-3) to obtain a rotation factor for a phase rotation operation based on the time alignment adjustment amount acquired by the time alignment adjustment amount acquisition section (1200),

wherein at the timing when the time alignment is not executed,

the rotation factor arithmetic section (500-3) outputs the rotation factor to the channel estimator (200-13), and

the channel estimator (200-13) performs the phase rotation operation on the second channel characteristic estimated value by using the rotation factor obtained by the rotation factor arithmetic section (500-3), and estimates the channel characteristic of the wireless channel by forgetting averaging of a result of the phase rotation operation and the first channel characteristic estimated value.

11. A channel characteristic estimating method for estimating a channel characteristic of a wireless channel between a wireless terminal (100-2) and a base station (100-1) in a system in which communication is performed between the wireless terminal (100-2) (100-2) and the base station (100-1) by orthogonal frequency division multiplex, comprising steps of:

obtaining a first channel characteristic estimated value based on a pilot signal included in the received signal of a first operation timing of a Fourier transformer (200-12);

reading a second channel characteristic estimated value estimated at a second operation timing older than the first operation timing and stored; and

estimating the channel characteristic of the wireless channel by forgetting averaging of the first channel characteristic estimated value and the second channel characteristic estimated value.

12. The channel characteristic estimating method according to claim 11, further comprising steps of:

obtaining a difference between the first operation timing and the second operation timing;

obtaining a rotation factor for a phase rotation operation based on the difference; and

performing the phase rotation operation on the second channel characteristic estimated value by using the rotation factor obtained,

wherein in the step of estimating the channel characteristic, the channel characteristic of the wireless channel is estimated by forgetting averaging of a result of the step of performing the phase rotation operation and the first channel characteristic estimated value.

13. A channel characteristic estimating method for estimating a channel characteristic of a wireless channel between a wireless terminal (100-2) and a base station (100-1) in a system in which communication is performed between the wireless terminal (100-2) and the base station (100-1) by orthogonal frequency division multiplex, comprising steps of:

outputting a time alignment adjustment amount to the wireless terminal (100-2) and adjusting a packet transmission timing of the wireless terminal (100-2);

acquiring the time alignment adjustment amount;

obtaining a rotation factor for a phase rotation operation based on the time alignment adjustment amount acquired;

obtaining a first channel characteristic estimated value based on a pilot signal included in a received signal of a first operation timing of a Fourier transformer (200-12);

reading a second channel characteristic estimated value estimated at a second operation timing older than the first operation timing and stored; and

performing the phase rotation operation on the second channel characteristic estimated value by using the rotation factor obtained at the step of obtaining the rotation factor, and estimating the channel characteristic of the wireless channel by forgetting averaging of a result of the phase rotation operation and the first channel characteristic estimated value.

14. A channel characteristic estimating method for estimating a channel characteristic of a wireless channel between a wireless terminal (100-2) and a base station (100-1) in a system in which communication is performed between the wireless terminal (100-2) and the base station (100-1) by orthogonal frequency division multiplex, comprising steps of:

outputting a time alignment adjustment amount to the wireless terminal (100-2) and performing, at a previously determined timing, a time alignment of adjusting a packet transmission timing of the wireless terminal (100-2); determining whether a timing is a timing to execute the time alignment or not; estimating, at the timing when the time alignment is performed, the channel characteristic of the wireless channel based on a pilot signal included in the received signal; and

obtaining, at the timing when the time alignment is not performed, a first channel characteristic estimated value based on the pilot signal included in the received signal of a first operation timing, reading a second channel characteristic estimated value estimated at a second operation timing older than the first operation timing and stored, and estimating the channel characteristic of the wireless channel by forgetting averaging of the first channel characteristic estimated value and the second channel characteristic estimated value.

FIG.1

BASE STATION (BS) TRANSMISSION SIDE ⟋100-1

ANTENNA ⟋200-7

| ⟋200-2 | ⟋200-3 | ⟋200-4 | 200-5 ⟋ | ⟋200-6 |
|---|---|---|---|---|
| PACKET GENERATION SECTION | CHANNEL ENCODER | MIMO ANTENNA CONTROLLER | IFFT TRANSFORMER | RF-Tx |

⟋200-8

WIRELESS CHANNEL

TERMINAL (MS) RECEPTION SIDE ⟋100-2

⟋200-10
ANTENNA

| ⟋200-11 | ⟋200-12 | 200-13 | 200-14 | ⟋200-15 | 200-16 |
|---|---|---|---|---|---|
| RF_Rx | FFT TRANSFORMER | CHANNEL ESTIMATOR | MIMO ANTENNA CONTROLLER | CHANNEL DECODER | PACKET CONVERSION SECTION |

FFT OPERATION TIMING τ

SYNCHRONIZATION CATCHING/ TRACKING UNIT ⟋200-17

FIG.2

SUPER PREAMBLE (TDM PILOT FOR INITIAL SYNCHRONIZATION, BASIC CONTROL INFORMATION (SECTOR ID, TIME, ETC.))

① : COMMON CONTROL CHANNEL

② : USER 1 TRAFFIC CHANNEL

③ : USER 2 TRAFFIC CHANNEL

FCPICH(COMMON PILOT CHANNEL)

16 SUBCARRIER

8 SYMBOL

FIG.3

EP 2 159 977 A2

(a)CHANNEL ESTIMATOR

200-13

400-4
400-1
400-3
200-12

RECEIVED SIGNAL → FFT TRANSFORMER

PILOT → CHANNEL ESTIMATION SECTION → CONJUGATE OPERATION SECTION

DATA → DELAY SECTION

DEMODULATED DATA OUTPUT

FFT OPERATION TIMING $\tau$

SUBCARRIER TIMING

400-2
400-5

SYNCHRONIZATION CATCHING/ TRACKING UNIT

200-17

(b)CHANNEL ESTIMATION SECTION

KNOWN PILOT SERIES PATTERN

401-1 401-4

FORGETTING AVERAGING FACTOR $\alpha$

401-6

RECEIVED PILOT INPUT SIGNAL

FIRST STORAGE SECTION (CHANNEL ESTIMATED VALUE $h_n$ AT TIME n)

CHANNEL ESTIMATED VALUE $h'_n$

401-3

FORGETTING AVERAGING FACTOR $(1-\alpha)$

SECOND STORAGE SECTION (CHANNEL ESTIMATED VALUE $h'_{n-1}$ AT TIME n=-1)

401-2
401-5

FIG.4  400-1

EP 2 159 977 A2

FIG.5

500-1 τ STORAGE SECTION

500-2 FFT OPERATION TIMING DIFFERENCE ACQUISITION SECTION (Δ)

500-3 ROTATION FACTOR ARITHMETIC SECTION

ROTATION EFFICIENT

$e^{jw\Delta}$

510 CHANNEL ESTIMATOR

200-12 FFT TRANSFORMER

RECEIVED SIGNAL

400-4

PILOT

600-1 CHANNEL ESTIMATION SECTION

400-3 CONJUGATE OPERATION SECTION

DATA

DELAY SECTION

DEMODULATED DATA OUTPUT

FFT OPERATION TIMING τ

SUBCARRIER TIMING    400-2    400-5

SYNCHRONIZATION CATCHING/ TRACKING UNIT    200-17

FIG.6

FIG.7

FIG.8

EP 2 159 977 A2

TERMINAL (MS) TRANSMISSION SIDE  /\/ 100-2

900-2
PACKET GENERATION SECTION

900-3
CHANNEL ENCODER

900-4
MIMO ANTENNA CONTROLLER

900-6
DFT TRANS-FORMER

900-7
IFFT TRANSFORMER

900-8
RF-Tx

900-9
ANTENNA

900-5
MS CONTROL CHANNEL SECTION

900-10
WIRELESS CHANNEL

BASE STATION (BS) RECEPTION SIDE  /\/ 100-1

900-12
ANTENNA

900-13
RF_Rx

900-14
FFT TRANS-FORMER

900-15
CHANNEL ESTIMATOR

900-16
CHANNEL EQUALIZER

900-17
IDFT TRANS-FORMER

900-18
MIMO ANTENNA CONTROLLER

900-19
CHANNEL DECODER

900-20
PACKET CONVERSION SECTION

900-21
BS CONTROL CHANNEL SECTION

FIG.9

EP 2 159 977 A2

FIG.10

1PHY FRAME

③

② ①

0 1 2 24

1 SUPERFRAME

① : COMMON CONTROL CHANNEL ①

② : USER 1 TRAFFIC CHANNEL

③ : USER 2 TRAFFIC CHANNEL

RPICH(REVERSE PILOT CHANNEL)

16SUBCARRIER

8 SYMBOL

EP 2 159 977 A2

BS          MS

S101

PREAMBLE

S103

SYSTEM SEARCH
SYSTEM SELECTION
PARAMETER ACQUISITION

S105

R-ACH    S107

BS CONTROL CHANNEL
INITIAL TIMING ADJUSTMENT
AMOUNT TRANSMISSION

S109

INITIAL TIMING
CONTROL

S111

R-PICH, R-DCH TRANSMISSION   S113

BS CONTROL CHANNEL
STEADY TIMING ADJUSTMENT
AMOUNT TRANSMISSION

S115

STEADY
TIMING
CONTROL

FIG.11

TERMINAL (MS) TRANSMISSION SIDE          100-2

```
800-2          800-3          800-4          800-6      800-7          800-8         ANTENNA  800-9

PACKET         CHANNEL        MIMO           DFT        IFFT           RF-Tx
GENERATION     ENCODER        ANTENNA        TRANS-     TRANSFORMER
SECTION                       CONTROLLER     FORMER

                              MS CONTROL
                              CHANNEL
               800-5          SECTION
```

800-10

WIRELESS CHANNEL

BASE STATION (BS) RECEPTION SIDE          100-1

```
ANTENNA  800-12   800-13    800-14       800-15        800-16      800-17     800-18        800-19         800-20

                  RF_Rx     FFT          CHANNEL       CHANNEL     IDFT       MIMO          CHANNEL        PACKET
                            TRANS-       ESTIMATOR     EQUALIZER   TRANS-     ANTENNA       DECODER        CONVERSION
                            FORMER                                 FORMER     CONTROLLER                   SECTION

                                    TIME ALIGNMENT                           BS CONTROL     800-21
                                    ADJUSTMENT AMOUNT                        CHANNEL
                                    ACQUISITION SECTION (Δ),                 SECTION
                            1200    ROTATION FACTOR
                                    ARITHMETIC SECTION
```

FIG.12

EP 2 159 977 A2

FIG.13

TERMINAL (MS) TRANSMISSION SIDE                 ⌒ 100-2

⌒ 800-2          ⌒ 800-3          ⌒ 800-4          ⌒ 800-6      ⌒ 800-7                    ANTENNA  ⌒ 800-9

| PACKET GENERATION SECTION | → | CHANNEL ENCODER | → | MIMO ANTENNA CONTROLLER | → | DFT TRANS-FORMER | | IFFT TRANSFORMER | | RF-Tx ⌒ 800-8 |

800-5 ⌒ | MS CONTROL CHANNEL SECTION |

⌒ 800-10

| WIRELESS CHANNEL |

BASE STATION (BS) RECEPTION SIDE              ⌒ 100-1

ANTENNA ⌒ 800-12    ⌒ 800-13    800-14    ⌒ 800-15    800-16    800-17    ⌒ 800-18    ⌒ 800-19    800-20

| RF_Rx | → | FFT TRANS-FORMER | → | CHANNEL ESTIMATOR | → | CHANNEL EQUALIZER | → | IDFT TRANS-FORMER | → | MIMO ANTENNA CONTROLLER | → | CHANNEL DECODER | → | PACKET CONVERSION SECTION |

1400-1 ⌒ | FORGETTING AVERAGING EXECUTION TIMING CONTROL SECTION |

| BS CONTROL CHANNEL SECTION | ⌒ 800-21

FIG.14

EP 2 159 977 A2

SUBCARRIER TIMING

1400-1

FORGETTING AVERAGING
EXECUTION TIMING
CONTROL SECTION

800-15

CHANNEL ESTIMATOR

800-14

RECEIVED SIGNAL

FFT
TRANSFORMER

PILOT

CHANNEL
ESTIMATION
SECTION

600-1

CONJUGATE
OPERATION SECTION

DATA

DELAY
SECTION

DEMODULATED DATA
OUTPUT

SUBCARRIER TIMING

FIG.15

FIG.16

```
┌─────────────────────────────┐
│      OBTAIN FIRST CHANNEL     │  ⟍⟋  S1701
│  CHARACTERISTIC ESTIMATED VALUE│
│      BASED ON PILOT SIGNAL    │
└─────────────────────────────┘
              │
              ▼
┌─────────────────────────────┐
│      READ SECOND CHANNEL      │  ⟍⟋  S1703
│  CHARACTERISTIC ESTIMATED VALUE│
└─────────────────────────────┘
              │
              ▼
┌─────────────────────────────┐
│   OBTAIN DIFFERENCE OF OPERATION│  ⟍⟋  S1705
│            TIMING             │
└─────────────────────────────┘
              │
              ▼
┌─────────────────────────────┐
│      OBTAIN ROTATION FACTOR   │  ⟍⟋  S1707
└─────────────────────────────┘
              │
              ▼
┌─────────────────────────────┐
│     PHASE ROTATION OPERATION  │  ⟍⟋  S1709
└─────────────────────────────┘
              │
              ▼
┌─────────────────────────────┐
│  ESTIMATE CHANNEL CHARACTERISTIC│  ⟍⟋  S1711
│     BY FORGETTING AVERAGING   │
└─────────────────────────────┘
              │
              ▼
┌─────────────────────────────┐
│        DEMODULATE DATA        │  ⟍⟋  S1713
└─────────────────────────────┘
```

FIG.17

FIG.18

S1901

DETERMINE WHETHER TIMING IS
TIMING WHEN TIME ALIGNMENT IS
EXECUTED

TIME ALIGNMENT
EXECUTION TIMING

NOT TIME ALIGNMENT
EXECUTION TIMING

S1903

EXECUTE TIME ALIGNMENT

S1907

OBTAIN FIRST CHANNEL
CHARACTERISTIC ESTIMATED VALUE
BASED ON PILOT SIGNAL

S1905

ESTIMATE CHANNEL CHARACTERISTIC
BASED ON PILOT SIGNAL

S1909

READ SECOND CHANNEL
CHARACTERISTIC ESTIMATED VALUE

S1911

ESTIMATE CHANNEL CHARACTERISTIC
BY FORGETTING AVERAGING

S1913

DEMODULATE DATA

FIG.19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008215254 A

- JP 2000295195 A